(19) Europäisches Patentamt
European Patent Office
Office européen des brevets

(11) Publication number: **0 035 269**
**B1**

(12) **EUROPEAN PATENT SPECIFICATION**

(45) Date of publication of patent specification: **12.06.85**

(51) Int. Cl.$^4$: **C 08 G 63/18,** C 08 G 63/22

(21) Application number: **81101491.9**

(22) Date of filing: **02.03.81**

(54) **Process for preparing polyarylates.**

(30) Priority: **03.03.80 US 126994**

(43) Date of publication of application:
**09.09.81 Bulletin 81/36**

(45) Publication of the grant of the patent:
**12.06.85 Bulletin 85/24**

(84) Designated Contracting States:
**AT BE CH DE FR GB IT LI NL SE**

(56) References cited:
**EP-A-0 000 832**
**US-A-3 948 856**

**POLYMER, Vol. 15, August 1974 London G. BIER "Polyarylates (Polyesters from Aromatic Dicarboxylic Acids and Bisphenols)" pages 527 to 535**

(73) Proprietor: **UNION CARBIDE CORPORATION**
**Old Ridgebury Road**
**Danbury Connecticut 06817 (US)**

(72) Inventor: **Berger, Mitchell Harvey**
**41 Dorchester Court**
**Somerville New Jersey 08876 (US)**
Inventor: **Maresca, Louis Michael**
**RD No. 1 Box 139A Riverview Terrace**
**Belle Mead New Jersey 08502 (US)**
Inventor: **Steiner, Ulrich Alfred**
**237 Jefferson Avenue**
**North Plainfield New Jersey 07060 (US)**

(74) Representative: **Weinhold, Peter, Dr. et al**
**Patentanwälte Dr. V. Schmied-Kowarzik Dipl.-Ing. G. Dannenberg Dr. P. Weinhold Dr. D. Gudel Dipl.-Ing. S. Schubert Dr. P. Barz**
**Siegfriedstrasse 8**
**D-8000 München 40 (DE)**

**EP 0 035 269 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention is directed to a process for preparing polyarylates having a reduced viscosity of at least 0.5 dl/g, which process comprises reacting the diester derivative of a dihydric phenol with an aromatic dicarboxylic acid in the presence of from 10 to 60 weight percent, based on the weight of the polyarylate produced, of at least one halogenated and/or etherified substituted aromatic or heteroaromatic compound, at a temperature of from 260 to 350°C, in the absence of a catalyst.

Polyarylates are polyesters derived from a dihydric phenol, particularly 2,2-bis(4-hydroxyphenyl)propane also identified as Bisphenol-A, and an aromatic dicarboxylic acid, particularly mixtures of terephthalic and isophthalic acids. These polyarylates are high temperature, high performance thermoplastic polymers with a good combination of thermal and mechanical properties. They also have good processability which allows them to be molded into a variety of articles.

Many processes have been described in the literature for the preparation of polyarylates. One such process is the diacetate process. In the diacetate process, a dihydric phenol is converted to its diester derivative which is then reacted with an aromatic dicarboxylic acid to form the polyarylate. However, heretofore, the diacetate process has been carried out by several different methods as illustrated in the following U.S. patents:

In US—A—2,595,343 an aromatic bisphenol is first reacted with acetic anhydride to form bisphenol diacetate which is then condensed with an aliphatic dicarboxylic acid to form a polyarylate by an acid interchange reaction. The condensation reaction is performed in the presence of an acid catalyst, such as p-toluenesulfonic acid, phosphoric acid or sulfuric acid. However, this acid exchange reaction does not yield an acceptable product when an aromatic dicarboxylic acid is substituted for the aliphatic acid.

US—A—3,225,003 describes the preparation of novel copolyesters by reacting hydroquinone diacetate with a mixture of hexahydroterephthalic acid and hexahydroisophthalic acid in the presence of a catalyst, such as sodium acetate, at a temperature of 230°C. The reaction is exemplified as being carried out in the presence of anhydrous sodium acetate catalyst and eutectic mixtures of biphenyl and diphenyl oxide (diphenyl ether) at 230°C in three stages for a total reaction time of about 28 hours. Thus, this process requires catalyst, long reaction times and several steps.

US—A—3,317,464 describes the preparation of linear aromatic polyesters by the polycondensation of diphenols, or their diacetates, with polynuclear aromatic dicarboxylic acids. The examples of this patent describe the preparation of the polyester using catalysts, such as mixtures of p-toluene sulphonic acid and antimony trioxide, or butyl orthotitanate, optionally in acetic acid. The reaction is carried out in a molten mixture of reagents and catalysts by heating these together under sub-atmospheric pressure. The patent states, but does not exemplify, that the reaction may be carried out in solution, in inert solvents, such as alpha-methyl-naphthalene, biphenyl or diphenyl oxide. Thus, this process requires catalysts as well as sub-atmospheric pressure conditions to form the polyesters.

US—A—3,329,653 describes the preparation of high molecular weight linear condensation polymers, such as aromatic polyesters, aliphatic polyamides, and polycarbamides. These polymers are formed at or below the melting point of the polymer by carrying out the reaction while the reacting materials are suspended in an inert non-solvent medium, with a swelling agent for the condensation polymer which also needs to be present in the reaction medium. Example 7 of this patent describes the preparation of poly[2,2-bis(4-hydroxyphenyl)propane isophthalate] by heating a mixture of 780.9 g of the diacetate of Bisphenol-A, 415.3 g of isophthalic acid, 900 g of Apco Inkol No. 0®, 25 g of sulfolane swelling agent and 2.5 g of sodium methoxide catalyst. The reaction is held in reflux for 40 hours. The patent describes, as particularly effective swelling agents, sulfolane, diphenyl ether, and quinoline. Thus, this process requires the use of large quantities of a non-solvent, a catalyst, swelling agents as well as long reaction times.

US—A—3,824,213 describes the preparation of halogenated aromatic polyesters by reacting in solution, an aliphatic carboxylic ester of a halogenated bisphenol, such as tetrachloro-bisphenol-A with an aromatic acid mixture of terephthalic and isophthalic acids at a temperature of 220—350°C, in the presence of a catalytically effective amount of a cobalt, nickel, or manganese salt of an aliphatic carboxylic acid. This patent describes that the esterification reaction may be conducted with said catalysts in a suitable solvent, such as a hydrocarbon, halogenated aliphatic or aromatic hydrocarbon or the like (i.e. a solvent which is inert under the reaction conditions employed). Specifically these solvents include diphenyl ether, benzophenone, dichloroethane and dichlorobenzene. This patent exemplifies that several prior art catalysts such as magnesium acetate are unsuitable for forming polyesters of acceptable inherent viscosities and that the particular cobalt, nickel or manganese salts, as described in this patent, are necessary to yield polyesters having an inherent viscosity of at least about 0.2, which is considered an acceptable viscosity in this patent.

US—A—3,948,856 describes an acid interchange polymerization process for producing an aromatic polyester by reacting substantially stoichiometric amounts of an aromatic diester with a dicarboxylic acid at a temperature of 220—350°C, in a solvent, and in the presence of a catalyst, which is a mixture of a transition metal salt of a strong inorganic acid and a transition metal salt of an aliphatic carboxylic acid. The solvent includes diphenyl ether, halogenated diphenyl ether, diphenyl sulfone, benzophenone, polyphenyl ethers, etc.

US—A—3,684,766 and 3,780,148 describe a variation of the diacetate process. In the patented

processes, a prepolymer is formed from, for example, a diacetate, such as Bisphenol-A diacetate, and an aromatic acid, in the presence of a catalyst. The prepolymer so formed is then comminuted into small particles. These particles are then contacted with a crystallizing agent to crystallize the polyester. The crystallized polyester is heated in the presence of an inert gas and under reduced pressure to increase the inherent viscosity of the polyester. However, the processes described in these patents require multi-steps including the step of crystallizing the prepolymer.

US—A—4,075,173 describes the preparation of copolyesters by reacting an aromatic dicarboxylic acid, a diacetate of Bisphenol-A, and an acetate of p-hydroxybenzoic acid. Various processes for producing polyarylates by the reaction of Bisphenol-A and terephthalic and isophthalic acids are reviewed in this patent. The following process for producing polyarylates, identified as route (1), is described in column 2, of the patent:

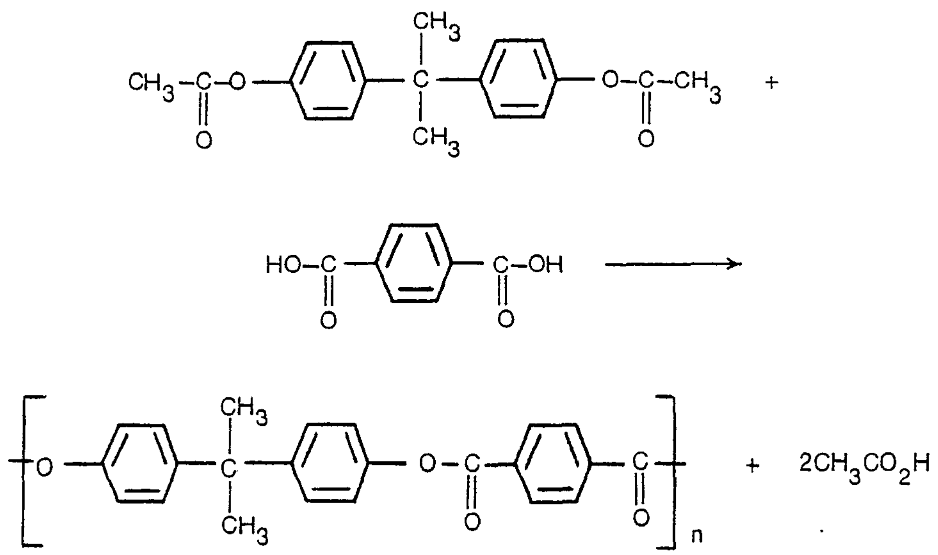

This process is the diacetate process as described herein, or the "Acetate process" as defined in the patent.

Column 2 of the patent states:

> "The route (1) is not desirable because the undesirable coloration and deterioration of polymer are particularly remarkable as disclosed in the abovementioned literature."

Further, column 3 of the patent states:

> "On the other hand, the route (1), Acetate process, is economically advantageous because the materials used are cheap and the operation is simple. For example, diacetate of bisphenol-A, a monomer for Acetate process, is synthesized by merely reacting acetic anhydride and bisphenol-A. Consequently, it may be said that, if the fatal drawbacks of Acetate process, coloration and deterioration, are solved, Acetate process will become the most superior process."

Thus, the skilled workers in the field of polyarylate chemistry realize that the existing processes for producing polyarylates have one or more deficiencies, and that a need exists to develop a viable diacetate process for producing polyarylates.

In US—A—4,075,173, a copolyester was prepared by the diacetate process by a solid-state polymerization of low molecular weight polymers without using crystallizing agents. The monomers used are the diacetate of bisphenol-A, terephthalic acid and/or isophthalic acid and an acetate of p-hydroxybenzoic acid. They are combined to form a prepolymer which is then converted to the desired high molecular weight polymer by solid state polymerization.

Thus, the diacetate processes for producing polyarylates by the procedures of the aforediscussed US patents, and as stated in US—A—4,075,173, are generally unsuitable since they are either economically unattractive and/or produce a commercially unmarketable product. These prior art processes utilize catalysts, large amounts of solvents and generally long reaction times, high temperatures, as well as a complex series of steps, i.e. those as described in US-Patents 3,684,766 and 3,780,148.

Thus the state of the art always contains the teaching that in order to obtain useful polyarylates catalysts must be used.

Therefor, a need exists for an economical and practical diacetate process for producing high molecular weight polyarylates.

In the diacetate process for producing polyarylates, problems exist which must be economically and practically solved in order to have a viable, economically attractive process. One problem when a diester derivative of a dihydric phenol is reacted with an aromatic dicarboxylic acid in the molten state is that sublimation of the diacid occurs. This disrupts the stoichiometry of the reaction and the polyarylate produced is not of acceptable molecular weight. To prevent sublimation of the diacid, several techniques have been developed. These include the use of large amounts of solvents together with a variety of catalysts and generally long reaction times in the polymerization process. However, these techniques are quite costly and do not provide an optimum process. Another problem when a diester derivative of a dihydric phenol is reacted with an aromatic dicarboxylic acid in the molten state is that the viscosity of the system increases dramatically towards the end of the reaction and therefore the reaction becomes diffusion controlled (the molecules are not close enough to insure rapid reaction) rather than kinetically controlled. Also, the polymer product is difficult to handle (i.e., removal from the reactor) due to this high viscosity.

Yet another problem in the production of polyarylates by the diacetate process it that a carboxylic acid is a by-product of the reaction of a diester derivative of a dihydric phenol with an aromatic dicarboxylic acid. In order to provide an efficient, economical process and a high molecular weight polyarylate, the acid, for example, the acetic acid has to be conveniently and efficiently removed.

It has now been discovered that polyarylate having a reduced viscosity of at least 0.5 dl/g, can be efficiently and economically produced by a process which does not require the use of a catalyst or large amounts of solvent. The present process comprises reacting a diester derivative of a dihydric phenol with an aromatic dicarboxylic acid in the presence of from 10 to 60 weight percent, based on the polyarylate produced, of at least one halogenated and/or etherified substituted aromatic or heteroaromatic compound, at a temperature of from 260 to 350°C.

The addition of 10 to 50% of diphenylether as a heat transfer medium in the melt polycondensation of polyarylates is known from US—A—4 127 560 and EP—A—832. Also according to these disclosures, however, a catalyst must be used.

The utilization of from 10 to 60 percent of the halogenated and/or etherified substituted aromatic or heteroaromatic compound in the diacetate process prevents sublimation of the aromatic dicarboxylic acid; thus producing polyarylates of acceptable molecular weight. Also, said aromatic or heteroaromatic cmpounds provide for better removal of the acetic acid by-product. Further, an additional benefit in using said aromatic or heteroaromatic compounds, in the amounts indicated, is that the viscosity of the system is decreased. This decrease in viscosity provides a faster reaction time since better mixing of the reactants occurs which allows the reaction to proceed under kinetic control. Additionally, by using the specified aromatic or heteroaromatic compounds, reaction times are relatively short so that a polyarylate is produced generally in less than 10 hours at the reaction temperatures and the polyarylates produced possess lighter color, as compared to those utilizing longer reaction times. Furthermore, the present process can be carried out at atmospheric pressure and therefore avoids the use of the costly equipment which carry out the diacetate process under vacuum.

The present invention is directed to a process for the preparation of polyarylates having a reduced viscosity of at least 0.5 dl/g, which process comprises reacting at a temperature of from 260 to 350°C:

(a) at least one diester derivative of a dihydric phenol having the following formula:

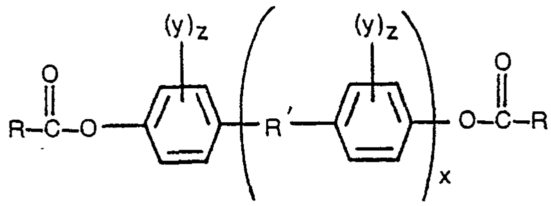

wherein R is independently selected from an alkyl radical having from 1 to 6 carbon atoms or cycloalkyl having from 4 to 7 carbon atoms, y is independently selected from alkyl groups of 1 to 4 carbon atoms, chlorine, or bromine, z independently has a value of from 0 to 4, inclusive, and R′ is independently selected from a divalent saturated and unsaturated aliphatic hydrocarbon radical having 1 to 8 carbon atoms, a cycloalkylene or cycloalkylidene radical having up to and including 9 carbon atoms, O, S, SO, $SO_2$, CO, x is 0 or 1; with

(b) at least one aromatic dicarboxylic acid,

in the presence of from 10 to 60 weight percent, based on the polyarylate produced, of at least one halogenated and/or etherified substituted aromatic or heteroaromatic compound of the formulae

(I) 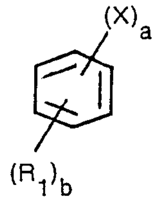

(II) 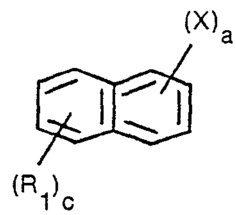

wherein X is independently Cl, Br, F, or $OR_2$, a is an integer of 1 to 5, $R_1$ is independently alkyl of 1 to 16 carbon atoms, cycloalkyl of 6 to 18 carbon atoms, aryl of 6 to 18 carbon atoms, or aralkyl or alkaryl of 7 to 18 carbon atoms, $R_2$ is independently alkyl of 1 to 16 carbon atoms or cycloalkyl of 6 to 18 carbon atoms, b is integer of 0, 1, or 2, and c is an integer of 0 to (8 − a), and

(III) 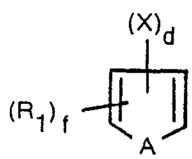

wherein A is O, S, or —CH=N—, X is independently Cl, Br, F, or $OR_2$, $R_1$ is independently alkyl of 1 to 16 carbon atoms, cycloalkyl of 6 to 18 carbon atoms, aryl of 6 to 18 carbon, or aralkyl or alkaryl of 7 to 18 carbon atoms, $R_2$ is independently alkyl or 1 to 16 carbon atoms or cycloalkyl of 6 to 18 carbon atoms, d is an integer of 1 to 4 and f is an integer of 0 to (4 − d), said reaction being conducted in the absence of a catalyst.

In the above mentioned residues alkyl groups may be straight or branched methyl, ethyl, propyl, butyl, pentyl and hexyl groups and the alkylene groups straight or branched methylene, ethylene, propylene, butylene, pentylene, hexylene and heptylene groups. The cycloalkylene groups are correspondingly derived.

The diester derivative of the dihydric phenol is prepared by reacting a dihydric phenol with an acid anhydride derived from acids containing from 2 to 8 carbon atoms under conventional esterification conditions. The preferred acid anhydride is acetic anhydride. Generally, the dihydric phenol is reacted with the acid anhydride in the presence of an esterification catalyst, either in the presence or absence of a solvent.

The dihydric phenols that may be used in this invention include the following:

2,2-bis-(4-hydroxyphenyl)propane,
bis-(2-hydroxyphenyl)methane,
bis-(4-hydroxyphenyl)methane,
bis-(4-hydroxy-2,6-dimethyl-3-methoxyphenyl)methane,
1,1-bis-(4-hydroxyphenyl)ethane,
1,2-bis-(4-hydroxyphenyl)ethane,
1,1-bis-(4-hydroxy-2-chlorophenyl)ethane,
1,1-bis-(3-methyl-4-hydroxyphenyl)ethane,
1,3-bis-(3-methyl-4-hydroxyphenyl)propane,
2,2-bis-(3-phenyl-4-hydroxyphenyl)propane,
2,2-bis-(3-isopropyl-4-hydroxyphenyl)propane,
2,2-bis-(2-isopropyl-4-hydroxyphenyl)propane,
2,2-bis-(4-hydroxyphenyl)pentane,
3,3-bis-(4-hydroxyphenyl)pentane,
2,2-bis-(4-hydroxyphenyl)heptane,
1,2-bis-(4-hydroxyphenyl)-1,2-bis-(phenyl)-propane,
4,4'-(dihydroxyphenyl)ether,

4,4'-(dihydroxyphenyl)sulfide,
4,4'-(dihydroxyphenyl)sulfone,
4,4'-(dihydroxyphenyl)sulfoxide,
4,4'-(dihydroxybenzophenone), and
hydroquinone.

These dihydric phenols may be used individually or in any combination which when reacted with an aromatic dicarboxylic acid produces polyarylate polymers that essentially do not crystallize during the reaction and recovery steps. The preferred dihydric phenol is 2,2-bis(4-hydroxyphenyl)propane.

The aromatic dicarboxylic acids that may be used in this invention include terephthalic acid, isophthalic acid, any of the naphthalene dicarboxylic acids and mixtures thereof, as well as alkyl substituted homologs of these carboxylic acids, wherein the alkyl group contains from 1 to 4 carbon atoms, and acids containing other inert substituents such as halides, alkyl or aryl ethers.

Preferably, mixtures of isophthalic and terephthalic acids are used. The isophthalic acid to terephthalic acid ratio in the mixture is preferably 20:80 to about 100:0, while the most preferred acid ratio is 25:75 to 50:50. Also, from 0.5 to 20 percent of aliphatic diacids containing from 2 to 10 carbon atoms, such as adipic acid or sebacic acid, may be additionally used in the polymerization reaction.

The dihydric phenols and aromatic dicarboxylic acids are selected so that the polyarylate produced remains in an essentially amorphous state during the polymerization reaction and recovery step.

The reaction of the diester derivative of a dihydric phenol with the aromatic dicarboxylic acid is preferably carried out in the presence of from 25 to 60, and most preferably, from 30 to 60 weight percent, based on the weight of the polyarylate produced, of at least one of the above mentioned halogenated and/or etherified substituted aromatic or heteroaromatic compounds.

The compounds encompassed by structures (I) through (III) include 1,2,3-trichlorobenzene; 1,2,4-trichlorobenzene, 1,2- or 1,3- or 1,4-dichlorobenzene; 1,2,3- or 1,2,4- or 1,3,5-trimethoxybenzene; 1,2- or 1,3- or 1,4-dibromobenzene; chlorobenzene; bromobenzene; 1-chloronaphthalene; 2-chloronaphthalene; 1-bromonaphthalene; 2-bromonaphthalene; 1,2- or 1,3- or 1,4-dimethoxybenzene; 2-bromotoluene; 2-chlorotoluene; 4-bromotoluene; 4-chlorotoluene; anisole; 2-methylanisole; 3-methylanisole; 4-methylanisole; 2-chloroanisole; 3-chloroanisole; 4-chloroanisole; 2-bromoanisole; 3-bromoanisole and 4-bromoanisole.

The amount of said compounds could vary during the polymerization reaction. For example, it may be advantageous to increase progressively the amount of these solvents to maintain the reaction medium at constant viscosity.

The reaction of the diester derivative of the dihydric phenol with the aromatic dicarboxylic acid is performed with these reactants present in amounts of from 0.85:1.00 to 1.10:1.00, preferably from 0.98:1.02 to 1.02:0.98, diester derivative : aromatic dicarboxylic acid.

The process of this invention is carried out at a temperature of from 260 to 350°C and preferably, from 275 to 295°C. The present process is generally conducted in an inert atmosphere (such as argon or nitrogen). The process is preferably carried out at atmospheric pressure although higher and lower pressures may be used. Obviously, at pressures higher than atmospheric pressure, higher temperatures will result.

The polymerization reaction is conducted for a period of time sufficient to produce a polyarylate having a reduced viscosity of at least 0.5 dl/g. The viscosity may even be greater than 1.0 dl/g but is preferably 0.6 to 0.8 dl/g. The time needed is usually less than 10 hours. Generally the reaction time is in the range of from 4 hours to 8 hours, dependding on the particular polyarylate being prepared.

The polymerization reaction of this invention may be carried out batchwise or continuously and by using any apparatus desired. Moreover, the reactants may be added to the polymerization zone in any way or order desired as long as the polymerization takes place in the presence of from 10 to 60 weight percent of at least one of the mentioned halogenated and/or etherified substituted aromatic or heteroaromatic compounds.

The diester derivative of the dihydric phenol may be formed, *in situ*, by adding the dihydric phenol together with the acid anhydride, an aromatic dicarboxylic acid and a halogenated and/or etherified substituted aromatic or heteroaromatic compound to the reactor and the reaction carried out in a single reaction zone under combined esterification and polymerization conditions as described above. Additionally, the diester derivative of the dihydric phenol may be first prepared and then an aromatic dicarboxylic acid and the halogenated and/or etherified substituted aromatic or heteroaromatic compound added directly to the same reaction vessel with the polymerization being carried out under the conditions described above.

The polyarylate polymer having a reduced viscosity of at least 0.5 dl/g is recovered in its final form by methods well known to those in the art, such as by direct devolatilization in an extruder under conditions sufficient to remove the halogenated and/or etherified substituted aromatic or heteroaromatic compound, coagulation or spray drying.

The polyarylates may also be prepared by first forming a polyarylate prepolymer having a reduced viscosity of from 0.1 to 0.4 dl/g, by reacting the diester derivative of a dihydric phenol with an aromatic dicarboxylic acid in the presence of the halogenated and/or etherified substituted aromatic or heteroaromatic compound under the conditions described previously, for a reaction time of 3 hours. The

polyarylate prepolymer is then heated at temperatures of from 300 to 350°C to obtain a polyarylate having a reduced viscosity of from at least 0.5 dl/g.

Alternatively, the polyarylate prepolymer may be added directly, after its formation, to a vented extruder wherein the molecular weight is increased to form a polymer having a reduced viscosity of at least 0.5 dl/g. For example, the molecular weight of polyarylate prepolymer is increased in the extruder at a temperature of from about 320 to about 350°C, under a vacuum of 0.4 to 0.26 mbar and a residence time of from 10 to 30 minutes.

The process of this invention produces normally solid polyarylates having a reduced viscosity of at least 0.5 dl/g, preferably from 0.6 to 0.8 dl/g, as measured in chloroform (0.5 g/100 ml chloroform) or other suitable solvent at 25°C.

In those instances where the polyarylate is not soluble in chloroform, other solvents known in the art such as p-chlorophenol or phenol/tetrachloroethane (60/40) may be used. Reduced viscosities of the polyarylates measured in these solvents generally have the same range.

The polyarylates may be prepared in the presence of materials such as molecular weight regulators or anti-oxidants.

The polyarylates obtained by the process of this invention may be used together with the well-known additives such as plasticizers, pigments, lubricating agents, mold release agents, stabilizers or inorganic fillers. These polyarylates may also be blended with other polymers.

## Examples

The following examples serve to give specific illustrations of the practice of this invention. In these examples, all parts and percentages are on a weight basis unless otherwise specified.

### Example 1

*Preparation of Prepolymer*

The apparatus used herein consisted of a 500 ml round bottom flask fitted with a nitrogen inlet, mechanical stirrer, a vacuum jacketed vigreux column connected to a distillation head and collector flask. 62.4 grams of bisphenol-A diacetate, 16.6 grams of isophthalic acid, 16.6 grams of terephthalic acid, and 13 grams of 1,2,4-trichlorobenzene were added to the flask. The reaction mixture was purged with nitrogen for about 20 minutes. The reaction mixture was then heated to about 275°C by immersion of the apparatus in a heating medium. Acetic acid started to distill when the temperature reached about 260°C. The reactants were maintained at 275°C for 2 hours. The temperature was then raised to about 290—295°C and the reactants maintained at this temperature for 2 hours. No apparent distillation of acetic acid was observed during the last hour. A thick yellow product formed. This was allowed to cool to ambient temperature.

Approximately 3 grams of the product was dissolved in methylene chloride (approximately 10 percent solids) and coagulated in isopropanol. The resultant material which was in the form of a fluff was washed with isopropanol two times and then dried at 120°C (for 24 hours at <1.33 mbar pressure). The reduced viscosity of this polymer was measured in chloroform (0.50 g/100 ml) at 25°C and found to be 0.22 dl/g.

*Preparation of Polymer*

To a test tube (25 by 200 mm.) fitted with a vacuum adapter, 20 grams of the prepolymer as prepared above was added. The pressure in the test tube was reduced to <0.53 mbar. After two minutes at ambient temperature, the test tube was heated to 345—350°C and the prepolymer was maintained at this temperature for 30 minutes. The test tube was allowed to cool to ambient temperature. A polymer was recovered by breaking the test tube. The polymer had a deep yellow color. The reduced viscosity of this polymer was measured in chloroform (0.50 g/100 ml) at 25°C and found to be 0.58 dl/g.

### Example 2

*Preparation of Prepolymer*

A prepolymer was prepared by the procedure as described in Example 1 except that 124.8 grams of bisphenol-A diacetate, 33.4 grams of isophthalic acid. 33.4 grams of terephthalic acid and 44 grams of 1,4-dimethoxybenzene were added.

Approximately 3 grams of the product produced was dissolved in methylene chloride (approximately 10 percent solids) and coagulated in isopropanol. The resultant material which was in the form of a fluff was washed with isopropanol two times and then dried at 120°C (for 24 hours at <1.33 mbar pressure). The reduced viscosity of this polymer was measured in chloroform (0.50 g/100 ml) at 25°C and found to be 0.27 dl/g.

*Preparation of polymer*

A polymer was prepared from this prepolymer by the procedure as fully described in Example 1.

The polymer which was recovered had a reduced viscosity of 0.61 dl/g as measured in chloroform (0.50 g/100 ml) at 25°C.

### Example 3

The reactor system consisted of an oil heated 7.6 l Inconel® reactor fitted with a nitrogen inlet,

mechanical agitator, and fractionating column (packed with ceramic saddles) connected to an overhead take-off device consisting of a reflux splitter condenser and a collection device.

The reactor was charged 2400 grams of Bisphenol-A diacetate, 637 grams of isophthalic acid, 637 grams of terephthalic acid and 1482 grams of o-dichlorobenzene. The reactor system was evacuated to 160 mbar pressure and then filled with nitrogen. This reactor was charged with nitrogen to achieve a pressure of 5.8 bar. The oil heater was turned on to raise the temperatures of the reactor to about 270°C. Acetic acid started to distill when the temperature reached about 270°C (oil temperature 655°C). The reaction mixture was maintained under these conditions for 9 hours. It was observed that the o-dichlorobenzene was codistilling with the acetic acid. Thus, additional o-dichlorobenzene was added during the reaction to maintain approximately 70 weight percent solids. The reactor was then de-pressurized and the product discharged under nitrogen. After cooling, the material was ground and stored in an oven under vacuum. The product was recovered by flushing off the solvent in a Killion® 2.5 cm single screw 2 vent extruder. The barrel temperature was 325°C, the first vent was at about 665 mbar and the second vent was at about 20 to 27 mbar. The residence time for the polymer was 2—5 minutes. The recovered material had a reduced viscosity of 0.83 dl/g as measured in chloroform (0.50 gm/100 ml) at 25°C.

**Claims**

1. A process for preparing polyarylate having a reduced viscosity of at least 0.5 dl/g, which process comprises reacting, at a temperature of from 260 to 350°C:

(a) at least one diester derivative of a dihydric phenol having the following formula:

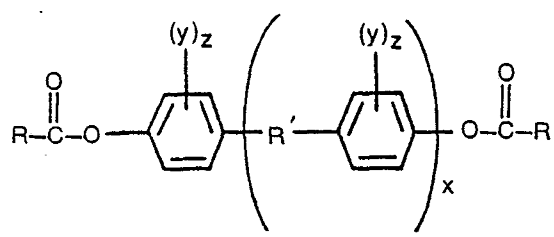

wherein R is independently selected from an alkyl radical having from 1 to 6 carbon atoms or cycloalkyl having from 4 to 7 carbon atoms, y is independently selected from alkyl groups of 1 to 4 carbon atoms, chlorine, or bromine, z independently has a value of from 0 to 4, inclusive, and R′ is independently selected from a divalent saturated and unsaturated aliphatic hydrocarbon radical having 1 to 8 carbon atoms, a cycloalkylene or cycloalkylidene radical having up to and including 9 carbon atoms, O, S, SO, $SO_2$, CO, x is 0 or 1; with

(b) at least one aromatic dicarboxylic acid,

in the presence of from 10 to 60 weight percent, based on the polyarylate produced, of at least one halogenated and/or etherified substituted aromatic or heteroaromatic compound of the formulae

(I) 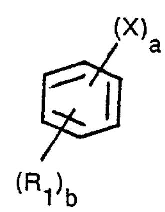

(II) 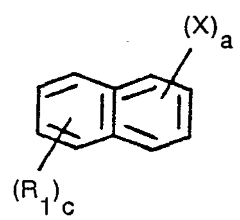

wherein X is independently Cl, Br, F, or $OR_2$, a is an integer of 1 to 5, $R_1$ is independently alkyl of 1 to 16 carbon atoms, cycloalkyl of 6 to 18 carbon atoms, aryl off 6 to 18 carbon atoms, or aralkyl or alkaryl of 7 to 18 carbon atoms, $R_2$ is independently alkyl of 1 to 16 carbon atoms or cycloalkyl of 6 to 18 carbon atoms, b is integer of 0, 1, or 2, and c is an integer of 0 to (8 − a), and

(III) 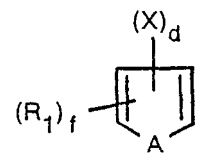

wherein A is O, S, or —CH=N—, X is independently Cl, Br, F, or $OR_2$, $R_1$ is independently alkyl of 1 to 16 carbon atoms, cycloalkyl of 6 to 18 carbon atoms, aryl of 6 to 18 carbon, or aralkyl or alkaryl of 7 to 18 carbon atoms, $R_2$ is independently alkyl or 1 to 16 carbon atoms or cycloalkyl of 6 to 18 carbon atoms, d is an integer of 1 to 4 and f is an integer of 0 to (4 − d), said reaction being conducted in the absence of a catalyst.

2. A process as defined in claim 1 wherein the diester derivative of a dihydric phenol has the following formula:

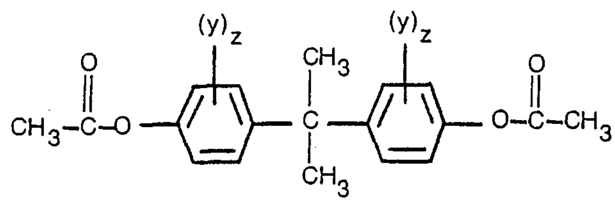

y and z having the same meaning as in claim 1.

3. A process as defined in claim 2 wherein each z is 0.

4. A process as defined in any of the preceding claims wherein the aromatic dicarboxylic acid is a mixture of isophthalic acid and terephthalic acid, preferably a mixture in which the ratio of isophthalic acid to terephthalic acid is 20:80 to 100:0.

5. A process as defined in any of the preceding claims wherein the aromatic compound being preferably selected from 1,2,4-trichlorobenzene, 1,4-dimethoxybenzene, o-dichlorobenzene, or anisole.

6. A process as defined in any of the preceding claims wherein the halogenated and/or etherified substituted aromatic or heteroaromatic compound is present in an amount of from 25 to 60 weight percent.

7. A process for preparing a polyarylate having a reduced viscosity of at least 0.5 dl/g which process comprises reacting at a temperature of from 260 to 350°C:

(a) an acid anhydride based on an acid containing from 2 to 8 carbon atoms;

(b) at least one dihydric phenol having the following formula:

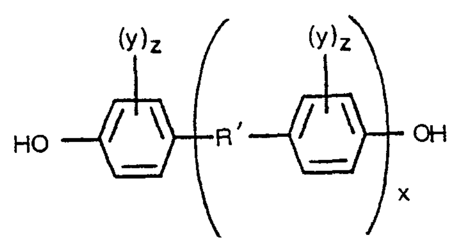

wherein y, R', x and z are defined as above, and

(c) at least one aromatic dicarboxylic acid,

in the presence of from 10 to 60 weight percent, based on the polyarylate produced, of at least one halogenated and/or etherified substituted aromatic or heteroaromatic compound as defined above,

said reaction being conducted in the absence of a catalyst.

8. A process for preparing a polyarylate having a reduced viscosity of at least 0.5 dl/g, which process comprises the following steps:

I. forming a polyarylate prepolymer having a reduced viscosity of from 0.1 to 0.4 dl/g, by reacting:

(a) at least one diester derivative of a dihydric phenol having the following formula:

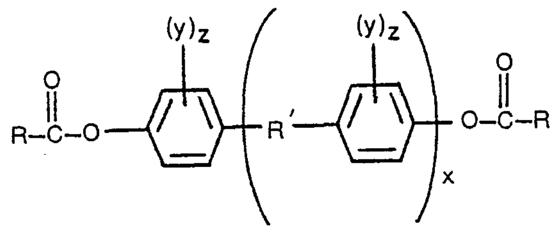

wherein R, R', y, x and z are as defined above,

(b) at least one aromatic dicarboxylic acid,

in the presence of from 10 to 60 weight percent, based on the polyarylate produced, of at least one halogenated and/or etherified substituted aromatic or heteroaromatic compound as defined above,

said reaction being conducted in the absence of catalyst,

II. Heating the prepolymer so formed at a temperature of from 300 to 350°C for a period of time, preferably in a vented extruder under vacuum, sufficient to form a polyarylate having a reduced viscosity of at least 0.5 dl/g.

**Patentansprüche**

1. Verfahren zur Herstellung eines Polyarylats mit einer reduzierten Viskosität von mindestens 0,5 dl/g, welches Verfahren umfaßt die Reaktion bei einer Temperatur von 260 bis 350°C:

(a) mindestens eines Diesterderivats eines zweiwertigen Phenols der folgenden Formel:

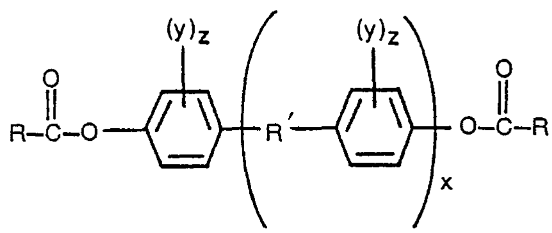

worin R unabhängig ausgewählt ist unter einem Alkylrest mit 1 bis 6 Kohlenstoffatomen oder Cycloalkyl mit 4 bis 7 Kohlenstoffatomen, y unabhängig ausgewählt ist unter Alkylgruppen mit 1 bis 4 Kohlenstoffatomen, Chlor oder Brom, z unabhängig einen Wert von 0 bis 4 einschließlich hat und R' unabhängig ausgewählt ist unter einem zweiwertigen gesättigten und ungesättigten aliphatischen Kohlenwasserstoffrest mit 1 bis 8 Kohlenstoffatomen, einem Cycloalkylen- oder Cycloalkylidenrest mit bis zu und einschließlich 9 Kohlenstoffatomen, O, S, SO, $SO_2$, CO und x 0 oder 1 ist; mit

(b) mindestens einer aromatischen Dicarbonsäure

in Gegenwart von 10 bis 60 Gewichtsprozent, bezogen auf das produzierte Polyarylat, mindestens einer halogenierten und/oder veretherten substituierten aromatischen oder heteroaromatischen Verbindung der Formeln

(I)

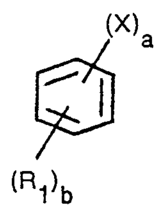

(II)

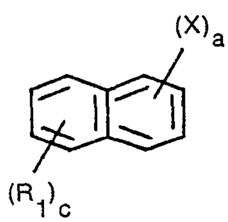

worin X unabhängig Cl, Br, F oder $OR_2$ ist, a eine ganze Zahl von 1 bis 5 ist, $R_1$ unabhängig Alkyl mit 1 bis 16 Kohlenstoffatomen, Cycloalkyl mit 6 bis 18 Kohlenstoffatomen, Aryl mit 6 bis 18 Kohlenstoffatomen oder Aralkyl oder Alkaryl mit 7 bis 18 Kohlenstoffatomen ist, $R_2$ unabhängig Alkyl mit 1 bis 16 Kohlenstoffatomen oder Cycloalkyl mit 6 bis 18 Kohlenstoffatomen ist, b eine ganze Zahl von 0, 1 oder 2 ist und c eine ganze Zahl von 8 bis (8 − a) ist, und

(III) 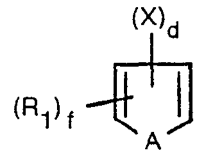

worin A O, S oder —CH=N— ist, X unabhängig Cl, Br, F oder $OR_2$ ist, $R_1$ unabhängig Alkyl mit 1 bis 16 Kohlenstoffatomen, Cycloalkyl mit 6 bis 18 Kohlenstoffatomen, Aryl mit 6 bis 18 Kohlenstoffatomen oder Aralkyl oder Alkaryl mit 7 bis 18 Kohlenstoffatomen ist, $R_2$ unabhängig Alkyl mit 1 bis 16 Kohlenstoffatomen oder Cycloalkyl mit 6 bis 18 Kohlenstoffatomen ist, d eine ganze Zahl von 1 bis 4 ist und f eine ganze Zahl von 0 bis (4 − d) ist,

wobei die Reaktion in Abwesenheit eines Katalysators durchgeführt wird.

2. Verfahren nach Anspruch 1, worin das Diesterderivat eines zweiwertigen Phenols die folgende Formel hat:

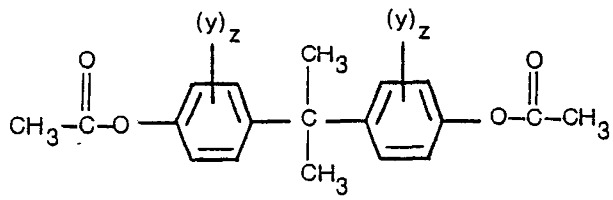

in der y und z dieselbe Bedeutung wie in Anspruch 1 haben.

3. Verfahren nach Anspruch 2, worin jedes z 0 ist.

4. Verfahren nach irgendeinem der vorangehenden Ansprüche, worin die aromatische Dicarbonsäure eine Mischung aus Isophthalsäure und Terephthalsäure ist, vorzugsweise eine Mischung, in der das Verhältnis von Isophthalsäure zu Terephthalsäure 20:80 bis 100:0 beträgt.

5. Verfahren nach irgendeinem der vorangehenden Ansprüche, worin die aromatische Verbindung vorzugsweise ausgewählt ist unter 1,2,4-Trichlorbenzol, 1,4-Dimethoxybenzol, o-Dichlorbenzol oder Anisol.

6. Verfahren nach irgendeinem der vorangehenden Ansprüche, worin die halogenierte und/oder veretherte substituierte aromatische oder heteroaromatische Verbindung in einer Menge von 25 bis 60 Gewichtsprozent vorhanden ist.

7. Verfahren zur Herstellung eines Polyarylats mit einer reduzierten Viskosität von mindestens 0,5 dl/g, welches Verfahren umfaßt die Reaktion bei einer Temperatur von 260 bis 350°C:

(a) eines Säureanhydrids auf Basis einer Säure, die 2 bis 8 Kohlenstoffatome enthält;

(b) mindestens einem zweiwertigen Phenol der folgenden Formel:

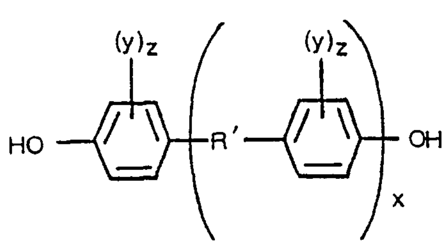

worin y, R′, x und z wie oben definiert sind, und

(c) mindestens einer aromatischen Dicarbonsäure

in Gegenwart von 10 bis 60 Gewichtsprozent, bezogen auf das produzierte Polyarylat, mindestens einer halogenierten und/oder veretherten substituierten aromatischen oder heteroaromatischen Verbindung, wie sie oben definiert ist,

wobei die Reaktion in Abwesenheit eines Katalysators durchgeführt wird.

8. Verfahren zur Herstellung eines Polyarylats mit einer reduzierten Viskosität von mindestens 0,5 dl/g, welches Verfahren die folgenden Stufen umfaßt:

I. Herstellung eines Polyarylat-Prepolymers mit einer reduzierten Viskosität von 0,1 bis 0,4 dl/g durch Umsetzen:

(a) mindestens eines Diesterderivats eines zweiwertigen Phenols der folgenden Formel:

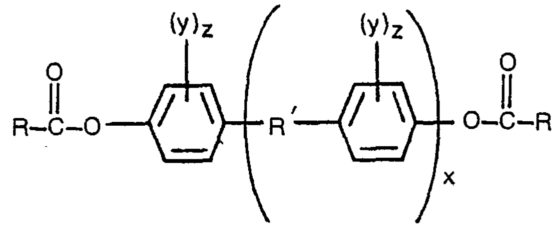

worin R, R', y, x und z wie oben definiert sind,

(b) mindestens einer aromatischen Dicarbonsäure

in Gegenwart von 10 bis 60 Gewichtsprozent, bezogen auf das produzierte Polyarylat, mindestens einer halogenierten und/oder veretherten substituierten aromatischen oder heteroaromatischen Verbindung, wie sie oben definiert ist,

wobei die Reaktion in Abwesenheit eines Katalysators durchgeführt wird,

II. Erhitzen des gebildeten Prepolymers bei einer Temperatur von 300 bis 350°C, vorzugsweise in einem Entgasungsextruder unter Vakuum, über eine ausreichende Zeitspanne, um ein Polyarylat mit einer reduzierten Viskosität von mindestens 0,5 dl/g zu bilden.

**Revendications**

1. Procédé de préparation d'un polyarylate ayant une viscosité réduite d'au moins 0,5 dl/g, procédé qui consiste à faire réagir, à une température de 260 à 350°C:

(a) au moins un diester dérivé d'un phénol dihydroxylique de formule générale:

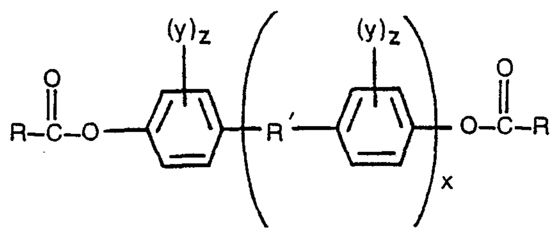

dans laquelle R est choisi indépendamment entre un radical alkyle ayant 1 à 6 atomes de carbone et un radical cycloalkyle ayant 4 à 7 atomes de carbone, y est choisi indépendamment entre des groupes alkyle ayant 1 à 4 atomes de carbone, le chlore ou le brome, z a indépendamment une valeur de 0 à 4 inclus et R' est choisi indépendamment entre un radical hydrocarboné aliphatique divalent saturé et insaturé ayant 1 à 8 atomes de carbone, un radical cycloalkylène ou un radical cycloalkylidène ayant jusqu'à et y compris 9 atomes de carbone, O, S, SO, $SO_2$, CO, x a la valeur 0 ou 1; avec

(b) au moins un acide dicarboxylique aromatique

en présence de 10 à 60% en poids, sur la base du polyarylate produit, d'au moins un composé aromatique ou hétéro-aromatique substitué halogéné et/ou étherifié de formules

(I)

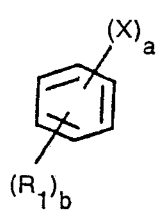

(II) 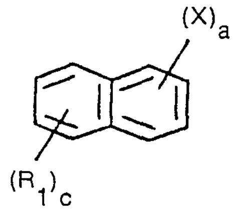

dans lesquelles X représente indépendamment Cl, Br, F ou $OR_2$, a est un nombre entier de 1 à 5, $R_1$ représente indépendamment un groupe alkyle ayant 1 à 16 atomes de carbone, cycloalkyle ayant 6 à 18 atomes de carbone, aryle ayant 6 à 18 atomes de carbone ou aralkyle ou alkaryle ayant 7 à 18 atomes de carbone, $R_2$ représente indépendamment un groupe alkyle ayant 1 à 16 atomes de carbone ou cycloalkyle ayant 6 à 18 atomes de carbone, b est un nombre entier égal à 0, 1 ou 2 et c est un nombre entier allant de 0 à $(8 - a)$, et

(III) 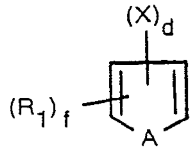

où A représente O, S ou —CH=N—, X représente indépendamment Cl, Br, F ou $OR_2$, $R_1$ représente indépendamment un groupe alkyle ayant 1 à 16 atomes de carbone, cycloalkyle ayant 6 à 18 atomes de carbone, aryle ayant 6 à 18 atomes de carbone ou aralkyle ou alkaryle ayant 7 à 18 atomes de carbone, $R_2$ représente indépendamment un groupe alkyle ayant 1 à 16 atomes de carbone ou cycloalkyle ayant 6 à 18 atomes de carbone, d est un nombre entier de 1 à 4 et f est un nombre entier de 0 à $(4 - d)$,

ladite réaction étant conduite en l'absence d'un catalyseur.

2. Procédé tel que défini dans la revendication 1, dans lequel le diester dérivé d'un phénol dihydroxylique répond à la formule suivante:

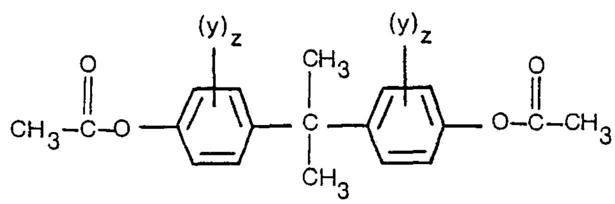

y et z ayant la même définition que dans la revendication 1.

3. Procédé tel que défini dans la revendication 2, dans lequel chaque z est égal à 0.

4. Procédé tel que défini dans l'une quelconque des revendications précédentes, dans lequel l'acide dicarboxylique aromatique est un mélange d'acide isophtalique et d'acide téréphtalique, de préférence un mélange dans lequel le rapport de l'acide isophtalique à l'acide téréphtalique va de 25:80 à 100:0.

5. Procédé tel que défini dans l'une quelconque des revendications précédentes, dans lequel le composé aromatique est choisi de préférence entre le 1,2,4-trichlorobenzène, le 1,4-diméthoxybenzène, le o-dichlorobenzène et l'anisole.

6. Procédé tel que défini dans l'une quelconque des revendications précédentes, dans lequel le composé aromatique ou hétéroaromatique substitué halogéné et/ou éthérifié est présent en une quantité de 25 à 60% en poids.

7. Procédé de préparation d'un polyarylate ayant une viscosité réduite d'au moins 0,5 dl/g, procédé qui consiste à faire réagir à une température de 260 à 350°C:

(a) un anhydride d'acide à base d'un acide contenant 2 à 8 atomes de carbone;

(b) au moins un phénol dihydroxylique ayant la formule suivante:

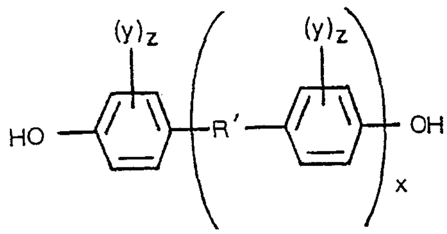

dans laquelle y, R', x et z sont tels que définis ci-dessus, et

(c) au moins un acide dicarboxylique aromatique,

en présence de 10 à 60% en poids, sur la base du polyarylate produit, d'au moins un composé aromatique ou hétéroaromatique substitué halogéné et/ou éthérifié tel que défini ci-dessus,

ladite réaction étant conduite en l'absence d'un catalyseur.

8. Procédé de préparation d'un polyarylate ayant une viscosité réduite d'au moins 0,5 dl/g, procédé qui comprend les étapes suivantes:

I. formation d'un prépolymère de polyarylate ayant une viscosité réduite de 0,1 à 0,4 dl/g, par réaction:

(a) d'au moins un diester dérivé d'un phénol dihydroxylique répondant à la formule suivante:

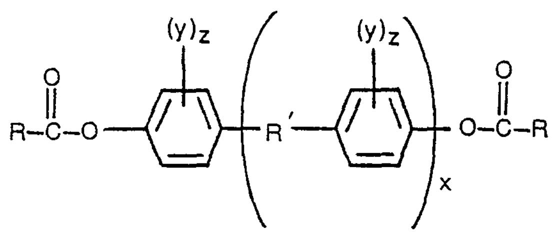

dans laquelle R, R', y, x et z ont les définitions données ci-dessus,

(b) d'au moins un acide dicarboxylique aromatique,

en présence de 10 à 60% en poids, sur la base du polyarylate produit, d'au moins un composé aromatique ou hétéroaromatique substitué halogéné et/ou éthérifié tel que défini ci-dessus,

ladite réaction étant conduite en l'absence d'un catalyseur,

II. chauffage du prépolymère ainsi formé à une température de 300 à 350°C pendant une période, de préférence dans une extrudeuse purgée sous vide, suffisante pour former un polyarylate ayant une viscosité réduite d'au moins 0,5 dl/g.